# EUROPÄISCHE PATENTSCHRIFT

(11) **EP 1 495 890 B1**
(45) Veröffentlichungstag und Bekanntmachung des Hinweises auf die Patenterteilung: **16.09.2009**
(21) Anmeldenummer: 04015870.1
(22) Anmeldetag: 06.07.2004
(51) Int. Cl.: B60J 7/02, B60J 7/043

(54) **Fahrzeugdach mit einer Dachöffnung und einer bewegbaren Dachschliesseinrichtung**
Vehicle roof with an opening and a movable closure element
Toit de véhicule avec une ouverture et un élément de fermeture mobile

(30) Priorität: 09.07.2003 DE 10331143
(43) Veröffentlichungstag der Anmeldung: 12.01.2005
(73) Patentinhaber: Webasto AG, 82131 Stockdorf (DE)
(72) Erfinder: De Gaillard, Francois, 75016 Paris (FR); Färber, Manfred, 82407 Wielenbach (DE)

(56) Entgegenhaltungen:
- DE-A1- 10 203 877
- DE-C1- 19 927 234
- GB-A- 2 240 519
- GB-A- 2 384 216
- US-A- 5 558 388

## Beschreibung

Die Erfindung betrifft ein Fahrzeugdach mit einer Dachöffnung und einer bewegbaren Dachschließeinrichtung zum Verschließen oder zumindest teilweisen Freigeben der Dachöffnung, die zwischen zwei Seitenholmen des Fahrzeugdaches angeordnet ist.

Aus der gattungsgemäßen DE 197 13 347 C1 ist ein derartiges Fahrzeugdach bekannt geworden, bei dem ein Deckel am Fahrzeugdach derart gelagert ist, daß er aus seiner Schließstellung in einer Dachöffnung nach hinten über das feste Fahrzeugdach verschiebbar ist. Die bei geöffnetem Deckel freigelegte Dachöffnung ist seitlich jedoch in üblicher Weise von den Seitenholmen des Daches begrenzt, so daß im Gegensatz zum offenen Dach eines Cabriolets auch bei freigelegter Dachöffnung ein dem geöffneten Cabriolet angenäherter Eindruck für den Fahrer bzw. den Beifahrer nicht entstehen wird.

Die DE 102 03 877 A1 offenbart ein Fahrzeugdach mit zwei seitlichen fest angeordneten Dachlängsholmen, einem mittleren in Fahrtrichtung verlaufenden Träger und zwei im wesentlichen in Dachquerrichtung beweglichen flexiblen Dachelementen. Jedes Dachelement ist einerseits an einer Seite des Trägers befestigt und andererseits bei geschlossenem Dach an dem ihm zugewandten Dachlängsholm festgelegt. Zum Öffnen des Daches kann jedes flexible Dachelement zum Träger bewegt und im Bereich des Trägers angeordnet werden.

Aufgabe der Erfindung ist es, ein eingangs genanntes Fahrzeugdach zu schaffen, bei dem bei freigelegter Dachöffnung die Dachstruktur verändert werden kann.

Diese Aufgabe wird bei dem oben genannten Fahrzeugdach erfindungsgemäß dadurch gelöst, daß die zwei Seitenholme am Fahrzeugdach in Querrichtung bewegbar gelagert sind und bei freigelegter Dachöffnung zwischen ihrer Außenstellung und einer gegenseitig angenäherten Innenstellung verstellbar sind. Durch das Entfernen der Seitenholme aus ihrer Außenstellung erhält der Fahrer bzw. der Beifahrer den Eindruck eines cabrioletähnlich geöffneten Daches, wobei dieser Vorteil insbesondere bei abgesenkten Seitenscheiben hervortritt, wenn eine große unbehinderte Öffnung von dem jeweils mittig angeordneten Seitenholm bis zur Gürtellinie an der Fahrzeugtür besteht. Da die verschiebbar gelagerten Seitenholme nicht manuell vom Fahrzeugdach entnommen werden müssen, benötigen sie keinen separaten Stauraum am oder im Fahrzeug. Grundsätzlich können die Seitenholme jedoch manuell versetzt oder verschoben werden oder auch mittels einer Antriebseinrichtung bewegt werden.

Vorteilhafte Ausgestaltungen der Erfindung sind in den Unteransprüchen angegeben.

Zweckmäßigerweise enthält jeder Seitenholm eine Führungseinrichtung für die bewegbare Dachschließeinrichtung. Die Führungseinrichtung kann zur Abstützung der Dachschließeinrichtung bzw. eines Deckels an seinem Vorderrand und ggfs. auch an seinem Hinterrand dienen. Der Deckel ist z. B. Teil eines außengeführten Schiebedaches.

Wenn jeder Seitenholm im Bereich seines Vorderendes an einem vorderen Dachquerbauteil und im Bereich seines Hinterendes an einem hinteren Dachquerbauteil bewegbar gelagert ist, ist stets für eine sichere Führung der Seitenholme gesorgt. Je nach Gestaltung des Daches kann es dann möglich sein, daß der vordere Bewegungsweg und der hintere Bewegungsweg jedes Seitenholms entlang dem vorderen Dachquerbauteil bzw. dem hinteren Dachquerbauteil bei der Verstellung des Seitenholms zwischen der Außenstellung und der Innenstellung unterschiedliche Längen aufweisen. Selbstverständlich können auch gleichlange Bewegungswege vorgesehen sein.

Zweckmäßigerweise ist jeder Seitenholm mittels einer vorderen und einer hinteren Lager- und Führungseinheit an einer vorderen und einer hinteren Führung des vorderen bzw. hinteren Dachquerbauteils verschiebbar gelagert. Die Lagerung hält den Seitenholm auch in vertikaler Richtung geführt, beispielsweise durch einen Umgriff oder Untergriff an den Führungen.

Wenn jeder Seitenholm an den beiden Lager- und Führungseinheiten um eine Längsachse schwenkbar gelagert ist, kann er z. B. aus seiner Ausgangsstellung am seitlichen Dachrand zunächst angehoben bzw. mit seiner Außenseite nach oben verschwenkt werden, so daß er z. B. aus einem Dichtungssitz angehoben wird. Je nach den konstruktiven Gegebenheiten kann es auch erforderlich sein, den Seitenholm in einer hochgeschwenkten Schwenkstellung entlang dem vorderen und dem hinteren Dachquerbauteil zu verfahren.

Vorzugsweise enthält jeder Seitenholm eine vordere und eine hintere Antriebseinheit, die an den Führungen des vorderen bzw. hinteren Dachquerbauteils in Antriebseingriff sind. Die Antriebseinheiten bewegen den Seitenholm sowohl an seinem Vorderrand wie auch an seinem Hinterrand, so daß er sich nicht verkanten und blockieren kann.

Wenn es aufgrund unterschiedlicher Verschiebeweglängen am Vorderrand des Seitenholms und am Hinterrand des Seitenholms erforderlich ist, so kann vorgesehen sein, daß die vordere Antriebseinheit gegenüber der hinteren Antriebseinheit bei gleichzeitigem Antrieb einen längeren oder einen kürzeren Antriebsweg zurücklegt.

Gemäß einer einfachen Gestaltung sind die vordere Antriebseinheit und die hintere Antriebseinheit miteinander insbesondere mechanisch gekoppelt. Jedoch können auch eigene Antriebsquellen wie z. B. Antriebsmotore vorgesehen sein, die z. B. elektronisch gesteuert werden. Hydraulische oder pneumatische Antriebe können ebenfalls vorgesehen sein.

Vorzugsweise enthalten die vordere Antriebseinheit und die hintere Antriebseinheit jeweils ein Drehantriebselement, das in Form- oder Reibeingriff mit den Führungen oder mit Eingriffsbahnen der Führungen ist. Bei Formeingriff ist die Eingriffsbahn z. B. profiliert oder gezahnt und das Drehantriebselement an seinem Umfang dementsprechend geformt. Hier ist eine mechanische Kopplung besonders einfach zu realisieren. Insbesondere weisen die vordere Antriebseinheit und die hintere Antriebseinheit jeweils ein Antriebsrad auf, wobei die beiden Antriebsräder unterschiedliche Wirkdurchmesser aufweisen, miteinander rotatorisch gekoppelt sind und unterschiedliche Wegstrecken zurücklegen können. Zweckmäßigerweise sind die vordere Antriebseinheit und die hintere Antriebseinheit bzw. die Antriebsräder mittels einer Welle, insbesondere einer Kardanwelle oder einer biegsamen Drehantriebswelle, miteinander verbunden.

Wenn die Antriebsräder Zahnräder sind, kann bei unterschiedlichen Bewegungsweglängen vorgesehen sein, daß sich die Verzahnungen der vorderen Antriebseinheit und der hinteren Antriebseinheit in ihrem jeweiligen Modul unterscheiden.

Zweckmäßigerweise ist eine Schwenkeinrichtung für jeden Seitenholm vorgesehen, die den Seitenholm in seiner Schwenkstellung um eine Längsachse verstellen kann, wobei die Verstellung abhängig von der jeweiligen Position des Seitenholms erfolgen kann. Daher kann die Schwenkeinrichtung eine Steuerbahn mit mehreren Bahnabschnitten aufweisen, an der ein Steuerteil des Seitenholms in Eingriff ist. Vorzugsweise ist ein Steuerarm des Seitenholms an der Steuerbahn in Eingriff, der den jeweiligen Bahnabschnitten der Steuerbahn entsprechende Schwenkstellungen einnimmt. Damit kann über die Form bzw. den Verlauf der Bahnabschnitte die Schwenkstellung des Seitenholms festgelegt werden.

Eine die Steuerbahn enthaltende Steuerkulisse kann entlang der vorderen oder der hinteren Führungsschiene angeordnet sein.

Zweckmäßigerweise ist ein erster äußerer Bahnabschnitt vorgesehen, der gegenüber der einwärts gerichteten Verschieberichtung des Seitenholms abwärts geneigt ist und damit eine anfängliche Einwärtsverschwenkung des Seitenholms steuert, sobald dieser aus seiner Außenstellung bewegt wird.

Des weiteren kann vorgesehen sein, daß zumindest eine Führungskulisse am Verschiebeweg des Seitenholms angeordnet ist und ein Halteteil des Seitenholms aufnimmt. Damit wird eine zusätzliche Abstützung und Halterung insbesondere in vertikaler Richtung erreicht. Zweckmäßigerweise das Halteteil ein am Steuerarm des Seitenholms angeordneter Abstützbolzen, der koaxial zur Schwenkachse des Seitenholms angeordnet ist. Dann kann auch beim Verschwenken des Seitenholms der Abstützbolzen in einer linearen Führungskulisse geführt sein. Ansonsten müßte die Führungskulisse an die Schwenkstellung bzw. Schwenkverstellung des Seitenholms angepaßt sein. Für eine sichere Abstützung kann es ausreichend sein, wenn jeweils eine äußere Führungskulisse in Zuordnung zur Außenstellung des Seitenholms und eine innere Führungskulisse in Zuordnung zur Innenstellung des Seitenholms vorgesehen ist. Jedoch kann die Führungskulisse auch durchgehend gebildet sein.

Vorzugsweise bildet ein Deckel, insbesondere ein Glasdeckel, die vordere Deckeleinrichtung. Der Deckel ist in einer Öffnungsstellung, in der zumindest sein Hinterrand angehoben ist, nach hinten über das Fahrzeugdach verfahrbar.

Nachfolgend wird ein Ausführungsbeispiel des Fahrzeugdaches unter Bezugnahme auf die Zeichnung näher erläutert. Es zeigt:
- Fig. 1: in perspektivischer Draufsicht ein Personenfahrzeug mit einem Fahrzeugdach und einem Deckel, der zur Freigabe einer Dachöffnung nach hinten in eine Offenstellung bewegt ist;
- Fig. 2: in perspektivischer Draufsicht eine Dachrahmenanordnung mit zwei bewegbaren Seitenholmen, die an zwei Dachquerbauteilen in Dachquerrichtung verschiebbar gelagert sind;
- Fig. 3: in Seitenansicht die Dachrahmenanordnung mit dem linken bewegbaren Seitenholm;

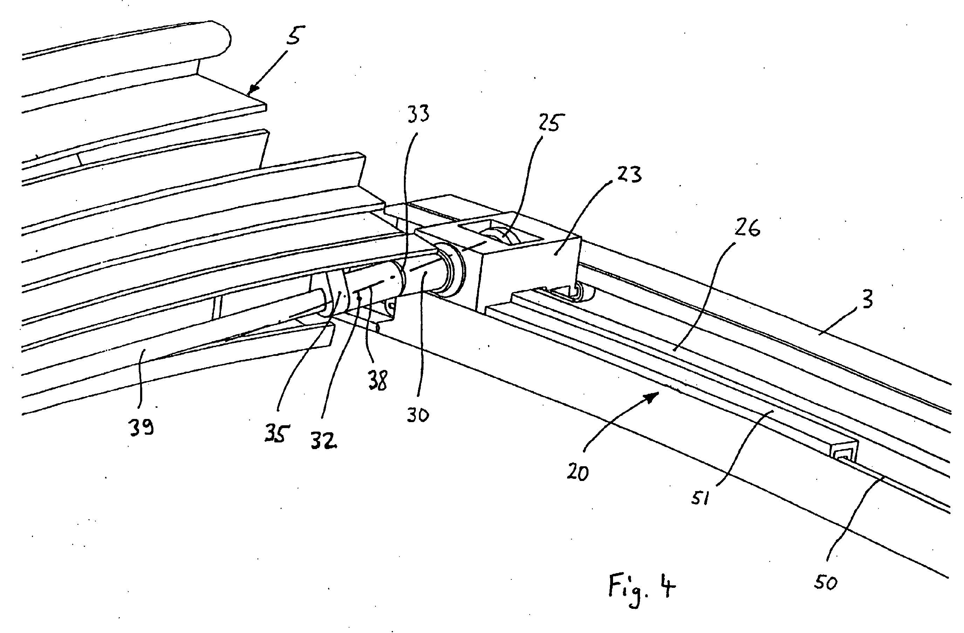

- Fig. 4: in perspektivischer Draufsicht in vergrößerter Darstellung das Vorderende des linken bewegbaren Seitenholms mit seiner Lagereinrichtung am Windlauf;
- Fig. 5: in perspektivischer Draufsicht in vergrößerter Darstellung das Hinterende des linken bewegbaren Seitenholms mit seiner Lagereinrichtung am hinteren Dachquerbauteil;

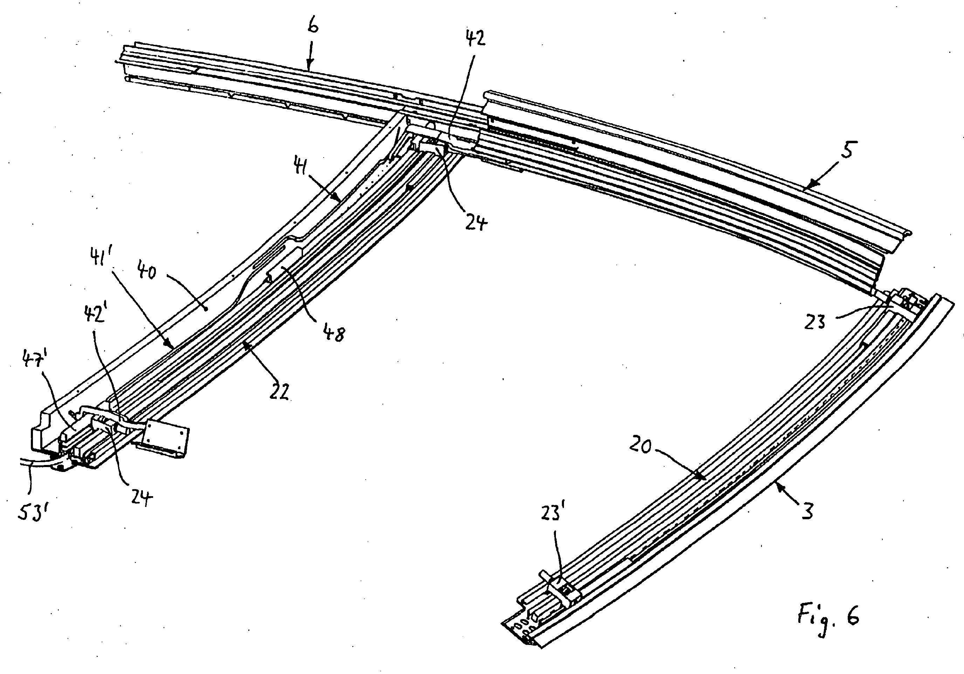

- Fig. 6: in perspektivischer Draufsicht gemäß Fig. 2 die Dachrahmenanordnung mit dem linken bewegbaren Seitenholm, der in seiner Außenstellung um seine Längsachse verschwenkt ist;
- Fig. 7: in perspektivischer Draufsicht in vergrößerter Darstellung das Hinterende des linken bewegbaren Seitenholms mit seiner Lagereinrichtung am hinteren Dachquerbauteil in einer ersten einwärts bewegten Zwischenstellung;

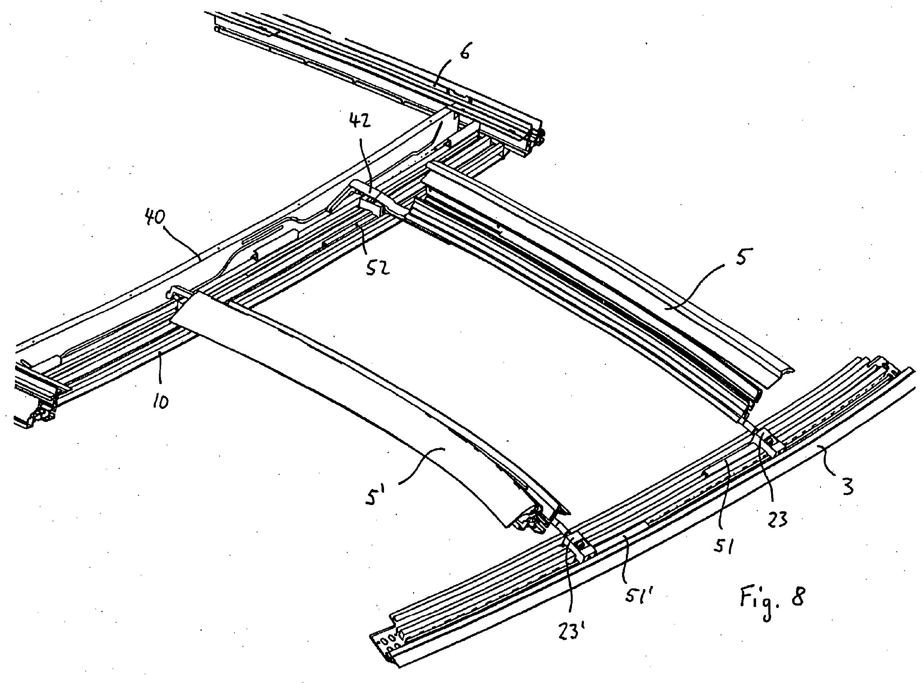

- Fig. 8: in perspektivischer Draufsicht gemäß Fig. 2 die Dachrahmenanordnung mit den beiden bewegbaren Seitenholmen in einer weiteren einwärts bewegten Zwischenstellung;

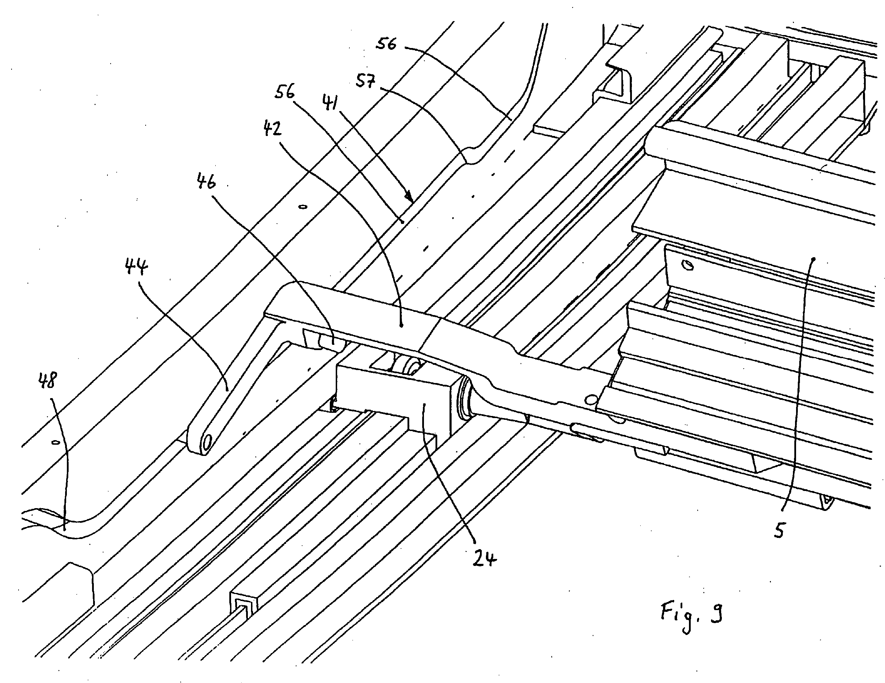

- Fig. 9: in perspektivischer Draufsicht in vergrößerter Darstellung das Hinterende des linken bewegbaren Seitenholms mit seiner Lagereinrichtung in der Zwischenstellung gemäß Fig. 8; und
- Fig. 10: in perspektivischer Draufsicht gemäß Fig. 2 die Dachrahmenanordnung mit den beiden bewegbaren Seitenholmen in ihrer Innen- oder Endstellung.

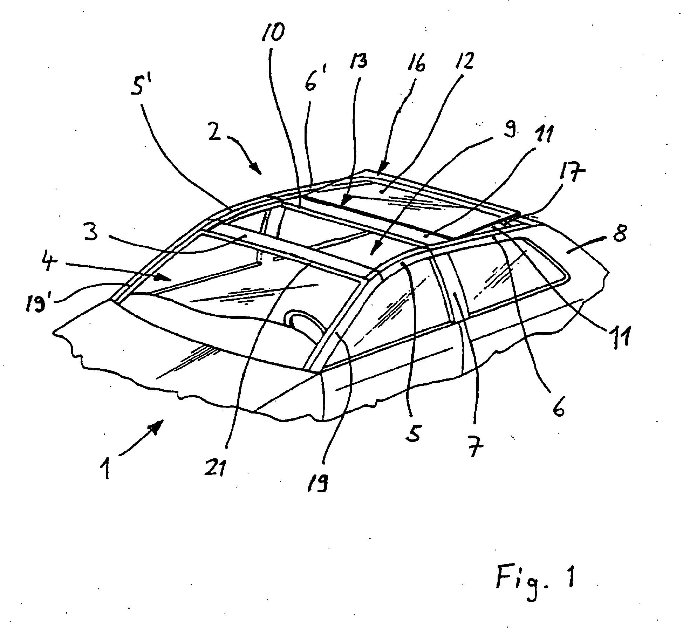

Ein Fahrzeug 1 (siehe Fig. 1) enthält ein Fahrzeugdach 2 mit einer Dachrahmenanordnung, die einen vorderen Dachquerholm oder Windlauf 3 oberhalb einer Frontscheibe 4 und beidseits jeweils einen vorderen bewegbaren Seitenholm 5 und 5' und einen dachfesten hinteren Seitenholm 6 und 6' aufweist, der sich etwa von der B-Säule 7 bis zur C-Säule 8 erstreckt. Eine Dachöffnung 9 erstreckt sich zwischen dem Windlauf 3 und den beiden bewegbaren Seitenholmen 5 und 5' und wird rückseitig von einem hinteren Dachquerholm 10 begrenzt, der mit den hinteren Seitenholmen 6 und 6' oder den B-Säulen 7 fest verbunden ist. Ein hinterer fester Dachabschnitt 11 erstreckt sich zwischen den hinteren Seitenholmen 6 und 6' und vom hinteren Dachquerholm 10 bis an einen weiteren Dachquerholm am Ende des Fahrzeugdaches 2 oberhalb der Heckscheibe.

Ein Deckel 12, z. B. ein Glasdeckel, eines außengeführten Schiebedaches ist zum Verschließen und zumindest teilweisen Freigeben der Dachöffnung 9 vorgesehen. Der Deckel 12 ist im Bereich seines Vorderrandes 13 beidseits mittels einer Lagereinheit an einer jeweiligen Führungseinrichtung verschiebbar gelagert, die eine Führungsschiene 14 am vorderen Seitenholm 5, 5' und eine weitere Führungsschiene 15 am hinteren Seitenholm 6, 6' aufweist. Im Bereich seines Hinterrandes 16 ist der Deckel 12 seitlich mittels einer Lagereinheit 17 an einer jeweiligen Führungseinrichtung verschiebbar gelagert, die eine Führungsschiene 18 am hinteren Seitenholm 6, 6' aufweist. Zum Freigeben der Dachöffnung 9 wird der Deckel 12 mittels der Lagereinheiten 17 an seinem Hinterrand 16 angehoben und nach hinten über den hinteren festen Dachabschnitt 11 verfahren (Stellung gemäß Fig. 1). Ein derartiger Deckel 12 mit Lagereinrichtung und Antriebsmechanik ist in der DE 197 13 347 C1 offenbart und wird daher hier nicht näher erläutert.

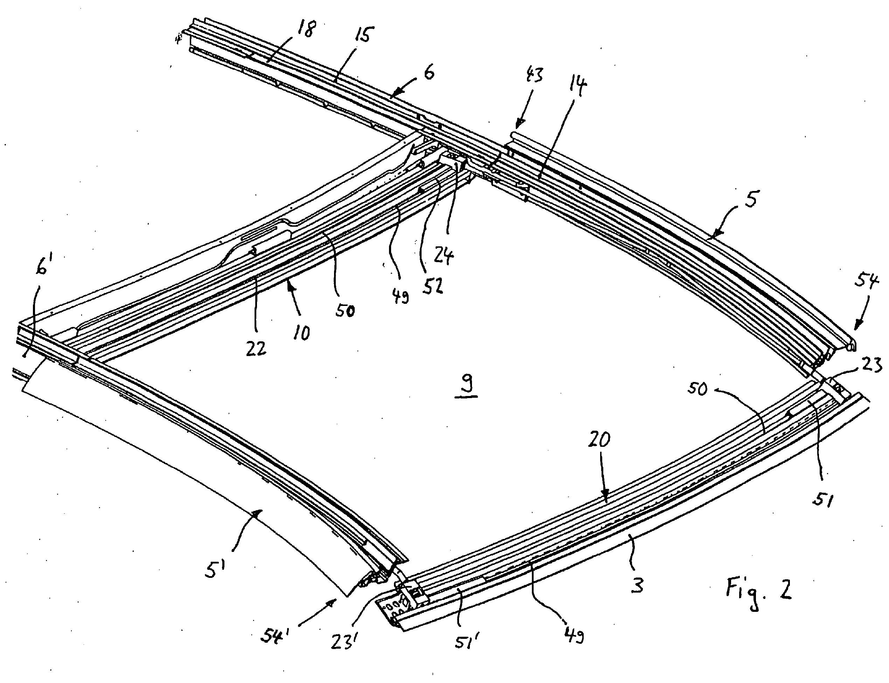

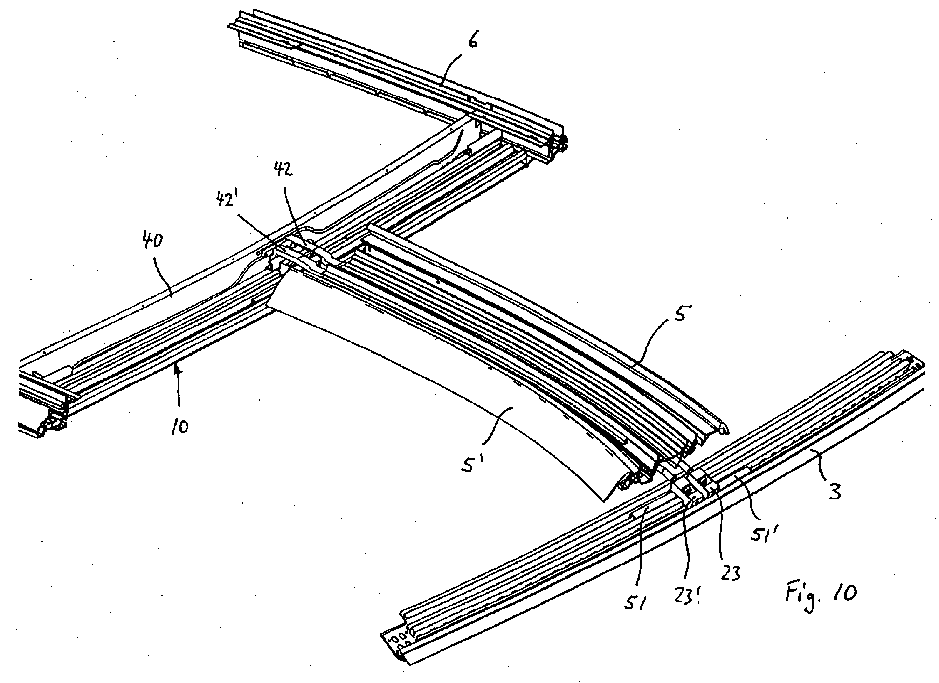

Jeder vordere Seitenholm 5, 5' ist aus seiner Funktions- oder Außenstellung (siehe Fig. 1 und 2), in der er die A-Säule 19, 19' bzw. den Windlauf 3 mit dem festen hinteren Seiten holm 6, 6' verbindet und die Führungsschiene 14 zum Lagern bzw. Verschieben des Deckels 12 bereitstellt, in eine Innenstellung (siehe Fig. 10) verlagerbar, sobald der Deckel 12 in einer hinteren Offenstellung angeordnet ist und ohne Lagereingriff mit der Führungsschiene 14 ist (Fig. 1). Der Dachaufbau ist bezüglich der vertikalen Fahrzeuglängsmittelebene im wesentlichen symmetrisch, so daß die Beschreibung der beiden bewegbaren Seitenholme 5 und 5' und der Lager- und Antriebseinrichtungen überwiegend anhand des linken Seitenholms 5 erfolgt (der rechte Seitenholm 5' ist in einigen Figuren nicht dargestellt).

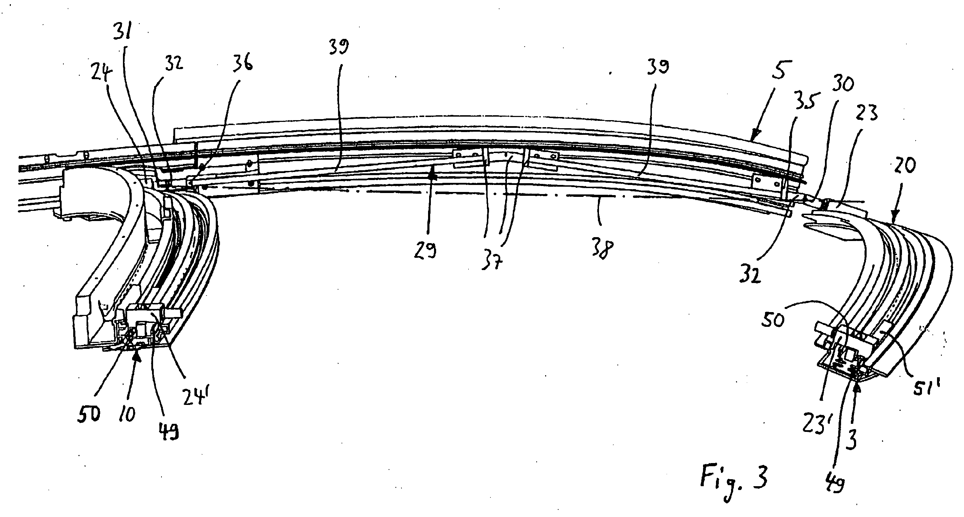

Der Windlauf 3 weist eine Führungsschiene 20 auf, die sich zwischen den beiden A-Säulen 19, 19' über die gesamte Länge des Windlaufs 3 erstreckt. Entsprechend der häufig üblichen Form eines Personenkraftwagens bzw. dessen Fahrzeugdaches verläuft der Oberrand 21 der Frontscheibe 4 entlang einer dreidimensionalen Kurve mit insbesondere nach vorne und nach oben gewölbtem Mittelabschnitt (in Fig. 1 ist der Oberrand jedoch vereinfacht als Gerade dargestellt). Dementsprechend ist der Windlauf 3 wie auch die daran angebrachte Führungsschiene 20 ein dreidimensional gewölbtes oder gekrümmtes Bauteil (siehe z. B. die Fig. 2 und 3).

Der hintere Dachquerholm 10, der vergleichbar dem Windlauf 3 ein dreidimensional gewölbtes Bauteil ist, weist ebenfalls eine Führungsschiene 22 auf, die dem Verlauf des hinteren Dachquerholms 10 angepaßt ist.

An der vorderen Führungsschiene 20 wie auch an der hinteren Führungsschiene 22 ist zum verschiebbaren Lagern jedes der beiden bewegbaren vorderen Seitenholme 5, 5' jeweils ein vorderer Steuerschlitten 23 und 23' und ein hinterer Steuerschlitten 24 und 24' verschiebbar gelagert. Am vorderen Steuerschlitten 23, 23' ist ein Zahnrad 25, 25' drehbar gelagert, das an einer an der vorderen Führungsschiene 20 gebildeten Verzahnung 26, z. B. an einer daran angebrachten oder ausgebildeten Zahnstange, in Eingriff ist. In gleicher Weise ist am hinteren Steuerschlitten 24 bzw. 24' ein Zahnrad 27 bzw. 27' drehbar gelagert, das an einer an der hinteren Führungsschiene 22 gebildeten Verzahnung 28, z. B. an einer daran angebrachten oder ausgebildeten Zahnstange, in Eingriff ist.

Eine jeweilige Kardangelenkeinrichtung 29 verbindet den vorderen Steuerschlitten 23, 23' und den hinteren Steuerschlitten 24, 24' des jeweiligen Seitenholms 5 bzw. 5' miteinander und koppelt deren Zahnräder 25 und 27 bzw. 25' und 27' drehfest miteinander. Die Kardangelenkeinrichtung 29 enthält ein vorderes Endstück 30, das an dem vorderen Steuerschlitten 23 koaxial zur Drehachse des Zahnrades 25 angebracht ist, ein hinteres Endstück 31, das an dem hinteren Steuerschlitten 24 koaxial zur Drehachse des Zahnrades 27 angebracht ist, und ein Mittelstück 32, das an einer vorderen Gelenkstelle 33 und einer hinteren Gelenkstelle 34 mit dem vorderen bzw. dem hinteren Endstück 30 bzw. 31 gelenkig verbunden ist. Der Seitenholm 5 ist an dem Mittelstück 32 der Kardangelenkeinrichtung 29 mittels einer vorderen Lagerung 35, einer hinteren Lagerung 36 und einer mittleren Lagerung 37 gelagert, so daß er um eine Schwenkachse 38, die durch die vordere und die hintere Gelenkstelle 33 und 34 der Kardangelenkeinrichtung 29 verläuft, relativ zum Fahrzeugdach bzw. dem vorderen und dem hinteren Steuerschlitten 23 und 24 schwenkbar ist. Eine Kardanwelle 39 der Kardangelenkeinrichtung 29, die die beiden Zahnräder 25 und 27 miteinander koppelt, ist dementsprechend mehrteilig gebildet und ist im vorderen Endstück 30 und im hinteren Endstück 31 drehbar gelagert. Das vordere Endstück 30 der Kardangelenkeinrichtung 29 bzw. die Kardanwelle enthält eine Einrichtung zum Längenausgleich (nicht dargestellt), so daß die wirksame Länge der Kardangelenkeinrichtung 29 veränderbar ist und sich an variierende Abstände zwischen der vorderen Führungsschiene 20 und der hinteren Führungsschiene 22 anpassen kann. Statt der dargestellten mittleren Lagerung 37 mit nur einer Gelenkstelle der Kardangelenkeinrichtung 29 können insbesondere bei einem stärker gekrümmten Seitenholm 5 auch mehrere mittlere Lagerungen zur Verbindung der Kardangelenkeinrichtung 29 mit dem Seitenholm 5 und dementsprechend eine mehrfache Unterteilung bzw. Umlenkung der Kardanwelle 39 vorgesehen sein, so daß der Verlauf der Kardanwelle 39 an die Form des Seitenholmes 5 angepaßt werden kann. Dies ist insbesondere bei einem stärker gebogenen Seitenholm zweckmäßig.

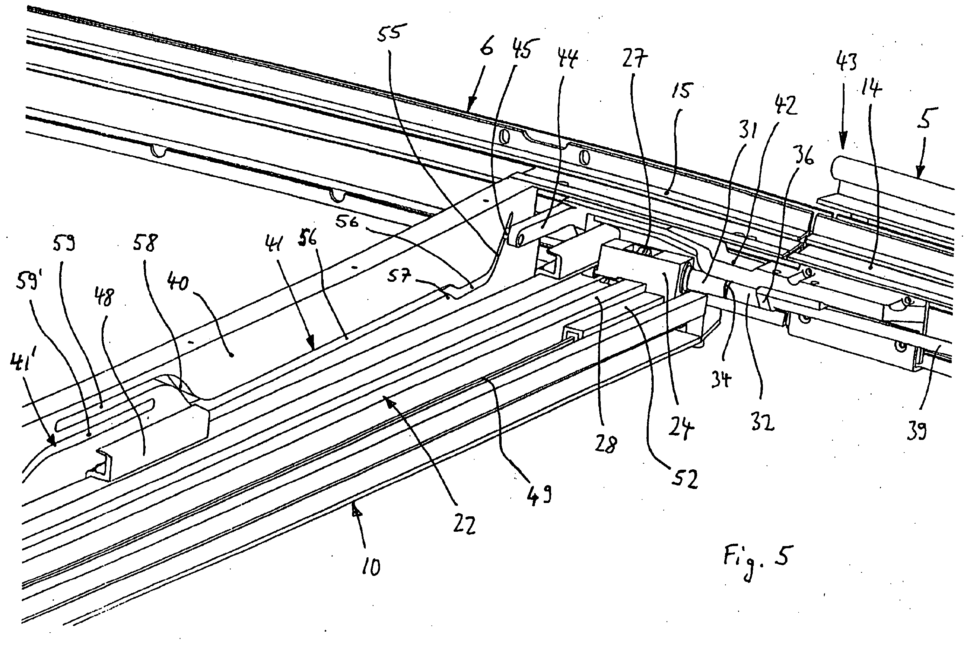

Der hintere Dachquerholm 10 enthält eine sich zwischen den beiden festen Seitenholmen 6 und 6' erstreckende Steuerkulisse 40 (siehe Fig. 5) mit einer Steuerbahn 41 und 41' für jeden bewegbaren Seitenholm 5 und 5'. Ein Halteteil 42, das über das Hinterende 43 des Seitenholms 5 nach hinten hinaus ragt, enthält einen sich einwärts erstreckenden Steuerarm 44, an dessen Ende ein Steuerbolzen 45 angeordnet ist. Der Steuerbolzen 45 ist in der diesem Seitenholm 5 zugeordneten Steuerbahn 41 der Steuerkulisse 40 verschiebbar aufgenommen und daran geführt. Die jeweilige Position des Steuerbolzens 45 relativ zum hinteren Steuerschlitten 24 und der Schwenkachse 38 des Seitenholms 5 legt eine Schwenkstellung des Seitenholms 5 um die Schwenkachse 38 fest.

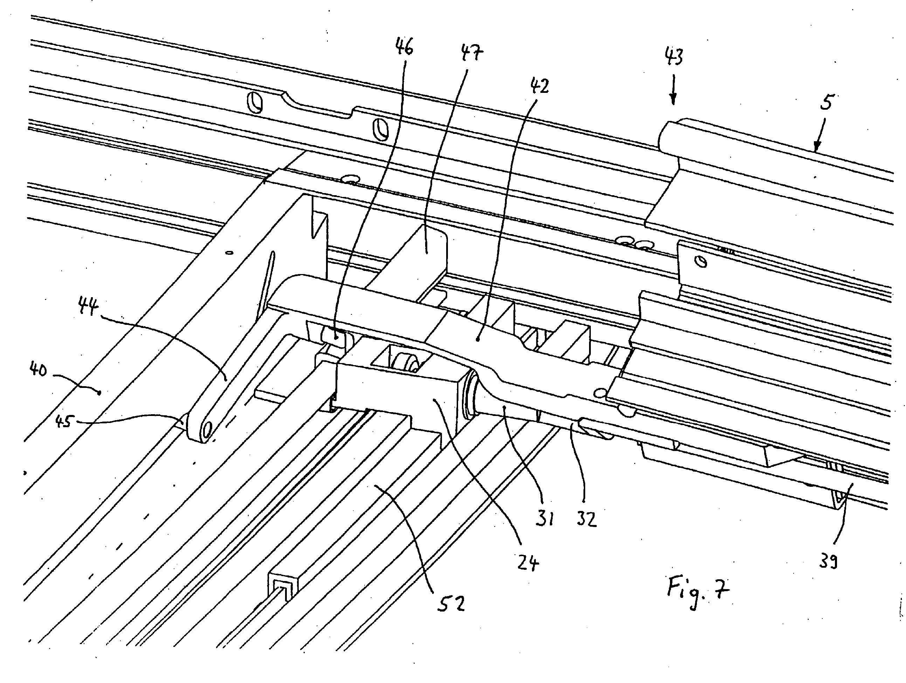

Am Steuerarm 44 oder am Halteteil 42 ist zusätzlich ein Abstützbolzen 46 angeordnet (Fig. 7), der koaxial zur Schwenkachse 38 des Seitenholms 5 liegt und somit beim Verschwenken des Seitenholms 5 nicht aus der Schwenkachse 38 heraus bewegt wird. Der hintere Dachquerholm 10 enthält an seinen beiden Außenenden jeweils eine U-förmige, nach hinten offene Kulisse 47 von begrenzter Länge, in der der Abstützbolzen 46 in und nahe der Außenstellung des Seitenholms 5 spielfrei aufgenommen ist. Eine entsprechende mittlere Kulisse 48 (Fig. 5) ist in der Mitte des hinteren Dachquerholms 10 angebracht und führt die Abstützbolzen 46 der beiden Seitenholme 5 und 5' in deren Innenstellung spielfrei.

Die vordere Führungsschiene 20 wie auch die hintere Führungsschiene 22 weisen jeweils zwei insbesondere nach oben gerichtete Führungsstege 49 und 50 auf, die beidseits der Verzahnung 26 bzw. 28, d. h. bezüglich der Fahrzeuglängsachse vor bzw. hinter der Verzahnung 26 bzw. 28, angeordnet sind. Die beiden vorderen Steuerschlitten 23 und 23' weisen jeweils eine zur Fahrzeugmitte hin gerichtete Führungsverlängerung 51 bzw. 51' auf, die z. B. als U-förmiges Profil gebildet ist und an dem jeweiligen Führungssteg 49 bzw. 50 anliegt bzw. diesen von oben umgreift. Dabei ist beispielsweise die Führungsverlängerung 51 am linken vorderen Steuerschlitten 23 derart angeordnet, daß sie am hinteren Führungssteg 50 gelagert ist, während die Führungsverlängerung 51' am rechten vorderen Steuerschlitten 23' derart angeordnet, daß sie am vorderen Führungssteg 49 gelagert ist. In der Innenstellung der beiden Seitenholme 5 und 5' (Fig. 10), in der sie in Dachmitte aneinander anliegen, können die beiden Führungsverlängerungen 51 und 51' daher parallel nebeneinander positioniert werden. Die beiden hinteren Steuerschlitten 24 und 24' weisen dementsprechend gebildete Führungsverlängerungen 52 bzw. 52' in entsprechender Anordnung auf.

Die beiden hinteren Steuerschlitten 24 und 24' sind jeweils mit einem an der hinteren Führungsschiene 22 geführten drucksteifen Antriebskabel 53 bzw. 53', wie es von Schiebedachantrieben bekannt ist, verbunden. Die beiden Antriebskabel 53 und 53' werden von einem gemeinsamen Antriebsmotor synchron angetrieben. Wenn der hintere Steuerschlitten 24 mittels des Antriebskabels 53 entlang der hinteren Führungsschiene 22 verschoben wird, überträgt die Kardanwelle 39 der Kardangelenkeinrichtung 29 die Rotation des hinteren Zahnrades 27 auf das vordere Zahnrad 25, so daß dieses den vorderen Steuerschlitten 23 gleichzeitig mit dem hinteren Steuerschlitten 24 verschiebt.

Da aufgrund der Form des Fahrzeugdaches die beiden außenseitigen Enden des Windlaufs 3 gegenüber den beiden Enden des hinteren Dachquerholms 10 weiter außen liegen und dementsprechend auch jeder bewegbare Seitenholm 5, 5' in seiner Außenstellung ein bezüglich der vertikalen Fahrzeuglängsmittelebene weiter außen angeordnetes Vorderende 54 aufweist, muß beim Verfahren des Seitenholms 5, 5' aus seiner Außenstellung in seine Innenstellung, in der die beiden Seitenholme 5, 5' in etwa parallel zur vertikalen Fahrzeuglängsmittelebene angeordnet sind und aneinander anliegen, das Vorderende 54 des Seitenholms 5 im Vergleich zu seinem Hinterende 43 einen größeren Weg entlang der vorderen Führungsschiene 20 zurücklegen. Da die Kardanwelle 39 beim Verschieben des Seitenholms 5, 5' an ihrem Vorderende und ihrem Hinterende dieselbe Rotation aufweist, müssen die jeweiligen Einheiten aus Zahnrad 25 und Zahnstange 26 bzw. Zahnrad 27 und Zahnstange 28 an dem vorderen und dem hinteren Steuerschlitten 23 bzw. 24 unterschiedlich gestaltet sein, damit der vordere Steuerschlitten 23 gegenüber dem hinteren Steuerschlitten 24 eine dementsprechend größere Wegstrecke zurücklegen kann. Im dargestellten Ausführungsbeispiel sind die beiden Verzahnungspaarungen mit unterschiedlichem Modul gebildet, so daß bei gleicher Rotationsgeschwindigkeit das vordere Zahnrad 25 gegenüber dem hinteren Zahnrad 27 eine größere Wegstrecke zurücklegt. Beispielsweise weist das hintere Zahnrad 27 fünfzehn Zähne und einen Teilkreisdurchmesser von 15 mm bei einem Modul von 1,0 auf, wohingegen das vordere Zahnrad 25 bei ebenfalls fünfzehn Zähnen einen Teilkreisdurchmesser von 15,47 mm bei einem Modul von 1,03 aufweist.

Um die Dachöffnung 3 vollständig freizulegen, wird der Deckel 12 aus seiner Schließstellung mittels einer Antriebseinrichtung entlang der Führungen 14 und 15 an den Seitenholmen 5, 5' bzw. 6 und 6' nach hinten und dabei über den hinteren Dachabschnitt 11 in seine Offenstellung verfahren, in der seine Lagereinrichtung außer Eingriff mit den Führungen 14 der vorderen Seitenholme 5, 5' ist. Anschließend wird die Antriebseinrichtung für die beiden Seitenholme 5, 5' aktiviert, so daß die beiden Antriebskabel 53, 53' die beiden hinteren Steuerschlitten 24 und 24' einwärts verschieben. Am linken Seitenholm 5 wird dabei zunächst der Steuerbolzen 45 in einem steil abwärts verlaufenden äußeren Bahnabschnitt 55 der Steuerbahn 41 (siehe Fig. 5) nach unten bewegt, so daß der Steuerarm 44 und das Halteteil 42 und damit der Seitenholm 5 verschwenkt werden.

Auf diese Weise wird auf dem einwärts gerichteten ersten Verschiebeweg des hinteren Steuerschlittens 24, dessen Bewegung durch die Kardanwelle 39 gleichzeitig auf den vorderen Steuerschlitten 23 übertragen wird, der Seitenholm 23 während seiner Einwärtsverlagerung um seine Schwenkachse 38 verschwenkt, wobei seine Außenseite angehoben wird und er aus seiner Anlage an einer Dichtungsanordnung am Windlauf 3 bzw. am hinteren Seitenholm 6 angehoben wird.

Die Steuerbahn 41 weist anschließend an den steil nach unten geneigten ersten, äußeren Bahnabschnitt 55 einen im wesentlichen parallel zur hinteren Führungsschiene 22 verlaufenden zweiten Bahnabschnitt 56 auf. Wenn der Steuerbolzen 45 sich entlang dieses zweiten Bahnabschnitts 56 bewegt, behält der Seitenholm 5 bei seiner Einwärtsverschiebung seine Schwenkstellung im wesentlichen bei. Ein kleiner Absatz 57 auf dem zweiten Bahnabschnitt 56 und ein nachfolgend höher liegender Bahnabschnitt 56 kann eine geringfügige Rückschwenkung des Seitenholms 5 bewirken. Gegen die Dachmitte hin enthält die Steuerbahn 41 einen ansteigenden dritten Bahnabschnitt 58, der in einen dachmittigen vierten Bahnabschnitt 59 übergeht, der wieder parallel zur Führungsschiene 22 verläuft. Der in dem ansteigenden dritten Bahnabschnitt 58 aufwärts geführte Steuerbolzen 45 verschwenkt den Seitenholm 5 wieder zurück in oder nahezu in seine Schwenkstellung, die er in seiner Außenstellung einnimmt und die er nun auch wieder in seiner dachmittigen End- oder Innenstellung einnimmt, in der der Steuerbolzen 45 im vierten Bahnabschnitt 59 geführt ist. Auf dem letzten Verschiebeweg des Seitenholmes 5 bzw. der Steuerschlitten 23 und 24 tritt der Abstützbolzen 46 in die mittlere Kulisse 48 ein und bietet zusätzlich eine sichere Lagerung des hinteren Steuerschlittens 24 und damit des Seitenholms 5 in seiner Innenstellung.

Der rechte Seitenholm 5' ist mittels der Steuerbahn 41', die im wesentlichen entsprechend der Steuerbahn 41 des linken Seitenholms 5 gebildet ist, in seiner Schwenkstellung entsprechend dem linken Seitenholm 5 verstellbar. Der vierte Bahnabschnitt 59' verläuft jedoch unterhalb des vierten Bahnabschnitts 59 des linken Seitenholms 5, damit sich die Steuerbolzen 46 und 46' in den Innenstellungen der beiden Seitenholme 5 und 5' aneinander vorbei bewegen können. Die Steuerbahn 41' des rechten Seitenholms 5' ist beispielsweise in ihrer Gesamtheit bei ansonsten gleicher Ausbildung weiter unten und damit näher zur hinteren Führungsschiene 22 gebildet. Der Schwenkmechanismus ist dementsprechend angepaßt, um ein gleichartiges Verschwenken des rechten Seitenholms 5' zu ermöglichen. Im übrigen wird der rechte Seitenholm 5' synchron zum linken Seitenholm 5 bewegt und verschwenkt. In seiner Innenstellung ist der rechte Seitenholm 5' mittels des in der mittleren Kulisse 48 aufgenommenen Steuerbolzens 46' zusätzlich gesichert. Die Rückbewegung der beiden Seitenholme 5 und 5' erfolgt in entgegengesetztem Bewegungsablauf.

In Abwandlung des Ausführungsbeispiels können auch hintere Seitenholme des Fahrzeugdaches, die eine hintere Dachöffnung seitlich umfassen, bewegbar gebildet sein. Dann kann auch entgegen dem beschriebenen Ausführungsbeispiel die Führung an einem hinteren Dachquerholm länger sein wie die Führung an einem vorderen Dachquerholm.

Statt der Kardangelenkeinrichtung 29 mit der Kardanwelle 39 kann auch eine flexible drehfeste Drehantriebswelle verwendet werden, die in einem Rohr aufgenommen ist. Der Seitenholm ist dann an dem Rohr an einer oder an mehreren Stellen befestigt.

### Bezugszeichenliste

- 1: Fahrzeug
- 2: Fahrzeugdach
- 3: Windlauf
- 4: Frontscheibe
- 5: bewegbarer Seitenholm
- 6: hinterer Seitenholm
- 7: B-Säule
- 8: C-Säule
- 9: Dachöffnung
- 10: hinterer Dachquerholm
- 11: fester Dachabschnitt
- 12: Deckel
- 13: Vorderrand
- 14: Führungsschiene
- 15: Führungsschiene
- 16: Hinterrand
- 17: Lagereinheit
- 18: Führungsschiene
- 19: A-Säule
- 20: vordere Führungsschiene
- 21: Oberrand
- 22: hintere Führungsschiene
- 23: vorderer Steuerschlitten
- 24: hinterer Steuerschlitten
- 25: Zahnrad
- 26: Zahnstange
- 27: Zahnrad
- 28: Zahnstange
- 29: Kardangelenkeinrichtung
- 30: vorderes Endstück
- 31: hinteres Endstück
- 32: Mittelstück
- 33: vordere Gelenkstelle
- 34: hintere Gelenkstelle
- 35: vordere Lagerung
- 36: hintere Lagerung
- 37: mittlere Lagerung
- 38: Schwenkachse
- 39: Kardanwelle
- 40: Steuerkulisse
- 41: Steuerbahn
- 42: Halteteil
- 43: Hinterende
- 44: Steuerarm
- 45: Steuerbolzen
- 46: Abstützbolzen
- 47: äußere Kulisse
- 48: mittlere Kulisse
- 49: Führungssteg
- 50: Führungssteg
- 51: Führungsverlängerung
- 52: Führungsverlängerung
- 53: Antriebskabel
- 54: Vorderende
- 55: erster äußerer Bahnabschnitt
- 56: zweiter Bahnabschnitt
- 57: Absatz
- 58: dritter Bahnabschnitt
- 59: vierter Bahnabschnitt

## Patentansprüche

1. Fahrzeugdach (2) mit einer Dachöffnung (9) und einer bewegbaren Dachschließeinrichtung (12) zum Verschließen oder zumindest teilweisen Freigeben der Dachöffnung (9), die zwischen zwei Seitenholmen (5, 5') des Fahrzeugdaches (2) angeordnet ist,
**dadurch gekennzeichnet,**
**daß** die zwei Seitenholme (5, 5') am Fahrzeugdach (2) in Querrichtung bewegbar gelagert sind und bei freigelegter Dachöffnung (9) zwischen ihrer Außenstellung und einer gegenseitig angenäherten Innenstellung verstellbar sind.

2. Fahrzeugdach nach Anspruch 1,
**dadurch gekennzeichnet, daß** jeder Seitenholm (5, 5') eine Führungseinrichtung (14) für die bewegbare Dachschließeinrichtung (12) aufweist.

3. Fahrzeugdach nach Anspruch 1 oder 2,
**dadurch gekennzeichnet, daß** jeder Seitenholm (5, 5') im Bereich seines Vorderendes (54) an einem vorderen Dachquerbauteil (3) und im Bereich seines Hinterendes (43) an einem hinteren Dachquerbauteil (10) bewegbar gelagert ist.

4. Fahrzeugdach nach Anspruch 3,
**dadurch gekennzeichnet, daß** der vordere Bewegungsweg und der hintere Bewegungsweg jedes Seitenholms (5, 5') entlang dem vorderen Dachquerbauteil (3) bzw. dem hinteren Dachquerbauteil (10) bei der Verstellung des Seitenholms (5, 5') zwischen der Außenstellung und der Innenstellung unterschiedliche Längen aufweisen.

5. Fahrzeugdach nach Anspruch 3 oder 4,
**dadurch gekennzeichnet, daß** jeder Seitenholm (5, 5') mittels einer vorderen und einer hinteren Lager- und Führungseinheit (23 bzw. 24) an einer vorderen und einer hinteren Führung (20 bzw. 22) des vorderen bzw. hinteren Dachquerbauteils (3 bzw. 10) verschiebbar gelagert ist.

6. Fahrzeugdach nach Anspruch 5,
**dadurch gekennzeichnet, daß** jeder Seitenholm (5, 5') an den beiden Lager- und Führungseinheiten (23, 24) um eine Längsachse (38) schwenkbar gelagert ist.

7. Fahrzeugdach nach einem der Ansprüche 1 bis 6,
**dadurch gekennzeichnet, daß** jeder Seitenholm (5, 5') eine vordere und eine hintere Antriebseinheit (25 bzw. 27) aufweist, die an den Führungen des vorderen bzw. hinteren Dachquerbauteils (3 bzw. 10) in Antriebseingriff sind.

8. Fahrzeugdach nach Anspruch 7,
**dadurch gekennzeichnet, daß** die vordere Antriebseinheit (25) gegenüber der hinteren Antriebseinheit (27) bei gleichzeitigem Antrieb einen größeren oder einen kleineren Antriebsweg zurücklegt.

9. Fahrzeugdach nach Anspruch 7 oder 8,
**dadurch gekennzeichnet, daß** die vordere Antriebseinheit (25) und die hintere Antriebseinheit (27) miteinander insbesondere mechanisch gekoppelt sind.

10. Fahrzeugdach nach einem der Ansprüche 7 bis 9,
**dadurch gekennzeichnet, daß** die vordere Antriebseinheit und die hintere Antriebseinheit jeweils ein Drehantriebselement (25 bzw. 27) aufweisen, das in Form- oder Reibeingriff mit den Führungen (20 bzw. 22) oder mit Eingriffsbahnen (26 bzw. 28) der Führungen (20 bzw. 22) ist.

11. Fahrzeugdach nach einem der Ansprüche 7 bis 10,
**dadurch gekennzeichnet, daß** die vordere Antriebseinheit und die hintere Antriebseinheit jeweils ein Antriebsrad (25 bzw. 27) aufweisen, die beiden Antriebsräder (25 und 27)unterschiedliche Wirkdurchmesser aufweisen, miteinander rotatorisch gekoppelt sind und unterschiedliche Wegstrecken zurücklegen.

12. Fahrzeugdach nach einem der Ansprüche 7 bis 11,
**dadurch gekennzeichnet, daß** die vordere Antriebseinheit und die hintere Antriebseinheit bzw. die Antriebsräder (25, 27) mittels einer Welle, insbesondere einer Kardanwelle (29, 39), miteinander verbunden sind.

13. Fahrzeugdach nach Anspruch 11 oder 12,
**dadurch gekennzeichnet, daß** die Antriebsräder Zahnräder (25, 27) sind und die Verzahnungen der vorderen Antriebseinheit und der hinteren Antriebseinheit sich in ihrem jeweiligen Modul unterscheiden.

14. Fahrzeugdach nach einem der Ansprüche 1 bis 13,
**dadurch gekennzeichnet, daß** jeder Seitenholm (5, 5') mittels einer Schwenkeinrichtung in seiner Schwenkstellung um eine Längsachse (38) verstellbar ist.

15. Fahrzeugdach nach Anspruch 14,
**dadurch gekennzeichnet, daß** die Schwenkeinrichtung eine Steuerbahn (41) mit mehreren Bahnabschnitten (55, 56, 58, 59) aufweist, an der ein Steuerteil (45) des Seitenholms (5, 5') in Eingriff ist.

16. Fahrzeugdach nach Anspruch 15,
**dadurch gekennzeichnet, daß** eine die Steuerbahn (41) enthaltende Steuerkulisse (40) entlang der vorderen oder der hinteren Führungsschiene (22 bzw. 22) angeordnet ist.

17. Fahrzeugdach nach Anspruch 15 oder 16,
**dadurch gekennzeichnet, daß** ein Steuerarm (42) des Seitenholms (5) an der Steuerbahn (41) in Eingriff ist und den jeweiligen Bahnabschnitten (55, 56, 58, 59) der Steuerbahn (41) entsprechende Schwenkstellungen einnimmt.

18. Fahrzeugdach nach einem der Ansprüche 15 bis 17,
**dadurch gekennzeichnet, daß** ein erster äußerer Bahnabschnitt (56), der gegenüber der Verschieberichtung des Seitenholms (5) abwärts geneigt ist, eine anfängliche Einwärtsverschwenkung des Seitenholms (5) steuert.

19. Fahrzeugdach nach einem der Ansprüche 1 bis 18,
**dadurch gekennzeichnet, daß** zumindest eine Führungskulisse (45, 48) am Verschiebeweg des Seitenholms (5, 5') angeordnet ist und ein Halteteil (46) des Seitenholms (5, 5') aufnimmt.

20. Fahrzeugdach nach Anspruch 19,
**dadurch gekennzeichnet, daß** das Halteteil (46) ein am Steuerarm (42) des Seitenholms (5, 5') angeordneter Abstützbolzen (46) ist, der koaxial zur Schwenkachse (38) des Seitenholms (5, 5') angeordnet ist.

21. Fahrzeugdach nach Anspruch 19 oder 20,
**dadurch gekennzeichnet, daß** jeweils eine äußere Führungskulisse (45) in Zuordnung zur Außenstellung des Seitenholms (5, 5') und eine innere Führungskulisse (48) in Zuordnung zur Innenstellung des Seitenholms (5, 5') vorgesehen ist.

22. Fahrzeugdach nach einem der Ansprüche 1 bis 21,
**dadurch gekennzeichnet, daß** ein Deckel (12), insbesondere ein Glasdeckel, die vordere Deckeleinrichtung bildet und in einer Öffnungsstellung, in der zumindest sein Hinterrand (16) angehoben ist, nach hinten über das Fahrzeugdach (11) verfahrbar ist.

## Claims

1. Vehicle roof (2) with a roof opening (9) and a movable roof closure device (12) for closing or at least partially opening up the roof opening (9), said roof closure device being arranged between two side members (5, 5') of the vehicle roof (2), **characterized in that** the two side members (5, 5') are mounted on the vehicle roof (2) in a manner such that they can move in the transverse direction and, when the roof opening (9) is exposed, can be adjusted between their outer position and an inner position in which they are brought closer to each other.

2. Vehicle roof according to Claim 1, **characterized in that** each side member (5, 5') has a guide device (14) for the movable roof closure device (12).

3. Vehicle roof according to Claim 1 or 2, **characterized in that** each side member (5, 5') is mounted movably in the region of its front end (54) on a front transverse roof component (3) and in the region of its rear end (43) on a rear transverse roof component (10).

4. Vehicle roof according to Claim 3, **characterized in that** the front movement distance and the rear movement distance of each side member (5, 5') along the front transverse roof component (3) and the rear transverse roof component (10) during the adjustment of the side member (5, 5') between the outer position and the inner position differ in length.

5. Vehicle roof according to Claim 3 or 4, **characterized in that** each side member (5, 5') is mounted displaceably by means of a front and a rear bearing and guide unit (23 and 24) on a front and a rear guide (20 and 22) of the front and rear transverse roof components (3 and 10).

6. Vehicle roof according to Claim 5, **characterized in that** each side member (5, 5') is mounted on the two bearing and guide units (23, 24) in a manner such that it can pivot about a longitudinal axis (38).

7. Vehicle roof according to one of Claims 1 to 6, **characterized in that** each side member (5, 5') has a front and a rear drive unit (25 and 27) which are in driving engagement on the guides of the front and rear transverse roof components (3 and 10).

8. Vehicle roof according to Claim 7, **characterized in that**, while being driven simultaneously, the front drive unit (25) covers a larger or smaller driving distance from the rear drive unit (27).

9. Vehicle roof according to Claim 7 or 8, **characterized in that** the front drive unit (25) and the rear drive unit (27) are in particular coupled mechanically to each other.

10. Vehicle roof according to one of Claims 7 to 9, **characterized in that** the front drive unit and the rear drive unit respectively have a rotary drive element (25 and 27) which is in engagement in terms of shape or frictionally with the guides (20 and 22) or with engagement tracks (26 and 28) of the guides (20 and 22).

11. Vehicle roof according to one of Claims 7 to 10, **characterized in that** the front drive unit and the rear drive unit respectively have a drive wheel (25 and 27), the two drive wheels (25 and 27) have different operative diameters, are coupled rotationally to each other and cover different distances.

12. Vehicle roof according to one of Claims 7 to 11, **characterized in that** the front drive unit and the rear drive unit or the drive wheels (25, 27) are connected to each other by means of a shaft, in particular a universally jointed shaft (29, 39).

13. Vehicle roof according to Claim 11 or 12, **characterized in that** the drive wheels are gear wheels (25, 27), and the toothings of the front drive unit and of the rear drive unit differ in their respective modulus.

14. Vehicle roof according to one of Claims 1 to 13, **characterized in that** each side member (5, 5') can be adjusted in its pivoted position about a longitudinal axis (38) by means of a pivoting device.

15. Vehicle roof according to Claim 14, **characterized in that** the pivoting device has a control track (41) with a plurality of track sections (55, 56, 58, 59), a control part (45) of the side member (5, 5') being in engagement on said control track.

16. Vehicle roof according to Claim 15, **characterized in that** a control slot (40) containing the control track (41) is arranged along the front or the rear guide rail (20 or 22).

17. Vehicle roof according to Claim 15 or 16, **characterized in that** a control arm (42) of the side member (5) is in engagement on the control track (41) and takes up pivoted positions corresponding to the respective track sections (55, 56, 58, 59) of the control track (41).

18. Vehicle roof according to one of Claims 15 to 17, **characterized in that** a first outer track section (56) which is inclined downward in relation to the direction of displacement of the side member (5) controls an initial inward pivoting of the side member (5).

19. Vehicle roof according to one of Claims 1 to 18, **characterized in that** at least one guide slot (45, 48) is arranged on the displacement path of the side member (5, 5') and receives a holding part (46) of the side member (5, 5').

20. Vehicle roof according to Claim 19, **characterized in that** the holding part (46) is a supporting bolt (46) which is arranged on the control arm (42) of the side member (5, 5') and is arranged coaxially with respect to the pivot axis (38) of the side member (5, 5').

21. Vehicle roof according to Claim 19 or 20, **characterized in that** an outer guide slot (45) is assigned to the outer position of the side member (5, 5') and an inner guide slot (48) is assigned to the inner position of the side member (5, 5').

22. Vehicle roof according to one of Claims 1 to 21, **characterized in that** a cover (12), in particular a glass cover, forms the front cover device and, in an open position, in which at least the rear edge (16) thereof is raised, can be moved to the rear over the vehicle roof (11).

## Revendications

1. Toit de véhicule (2) comprenant une ouverture de toit (9) et un dispositif de fermeture de toit mobile (12) pour fermer ou au moins ouvrir partiellement l'ouverture de toit (9), qui est disposé entre deux longerons latéraux (5, 5') du toit du véhicule (2),
**caractérisé en ce que**
les deux longerons latéraux (5, 5') sont montés de manière mobile dans la direction transversale sur le toit du véhicule (2) et lorsque l'ouverture du toit (9) est ouverte, peuvent être déplacés entre leur position extérieure et une position intérieure les rapprochant l'un de l'autre.

2. Toit de véhicule selon la revendication 1,
**caractérisé en ce que** chaque longeron latéral (5, 5') présente un dispositif de guidage (14) pour le dispositif de fermeture de toit mobile (12).

3. Toit de véhicule selon la revendication 1 ou 2,
**caractérisé en ce que** chaque longeron latéral (5, 5') est monté de manière mobile dans la région de son extrémité avant (54) sur un composant transversal avant du toit (3) et dans la région de son extrémité arrière (43) sur un composant transversal arrière du toit (10).

4. Toit de véhicule selon la revendication 3,
**caractérisé en ce que** la course de déplacement avant et la course de déplacement arrière de chaque longeron latéral (5, 5') le long du composant transversal avant du toit (3), respectivement arrière (10), présentent différentes longueurs lors du déplacement du longeron latéral (5, 5') entre la position extérieure et la position intérieure.

5. Toit de véhicule selon la revendication 3 ou 4,
**caractérisé en ce que** chaque longeron latéral (5, 5') est monté de manière déplaçable au moyen d'une unité de support et de guidage avant et arrière (23, respectivement 24) sur une glissière avant et arrière (20, respectivement 22) du composant transversal avant, respectivement arrière (3, respectivement 10) du toit.

6. Toit de véhicule selon la revendication 5,
**caractérisé en ce que** chaque longeron latéral (5, 5') est monté sur les deux unités de support et de guidage (23, 24) de manière à pouvoir pivoter autour d'un axe longitudinal (38).

7. Toit de véhicule selon l'une quelconque des revendications 1 à 6,
**caractérisé en ce que** chaque longeron latéral (5, 5') présente une unité d'entraînement avant et arrière (25, respectivement 27), qui sont en prise d'entraînement avec les glissières du composant transversal avant, respectivement arrière (3, respectivement 10), du toit.

8. Toit de véhicule selon la revendication 7,
**caractérisé en ce que** l'unité d'entraînement avant (25) parcourt, par rapport à l'unité d'entraînement arrière (27), une course d'entraînement plus grande ou plus petite pour un entraînement simultané.

9. Toit de véhicule selon la revendication 7 ou 8,
**caractérisé en ce que** l'unité d'entraînement avant (25) et l'unité d'entraînement arrière (27) sont accouplées l'une à l'autre, notamment mécaniquement.

10. Toit de véhicule selon l'une quelconque des revendications 7 à 9,
**caractérisé en ce que** l'unité d'entraînement avant et l'unité d'entraînement arrière présentent chacune un élément d'entraînement en rotation (25, respectivement 27), qui est en engagement par correspondance géométrique ou par friction avec les glissières (20, respectivement 22) ou avec des pistes d'engagement (26, respectivement 28) des glissières (20, respectivement 22).

11. Toit de véhicule selon l'une quelconque des revendications 7 à 10,
**caractérisé en ce que** l'unité d'entraînement avant et l'unité d'entraînement arrière présentent chacune une roue d'entraînement (25, respectivement 27), les deux roues d'entraînement (25 et 27) présentent des diamètres d'action différents, sont accouplées l'une à l'autre de manière rotative, et parcourent des distances différentes.

12. Toit de véhicule selon l'une quelconque des revendications 7 à 11,
**caractérisé en ce que** l'unité d'entraînement avant et l'unité d'entraînement arrière ou les roues d'entraînement (25, 27) sont connectées l'une à l'autre au moyen d'un arbre, notamment d'un arbre à cardan (29, 39).

13. Toit de véhicule selon la revendication 11 ou 12,
**caractérisé en ce que** les roues d'entraînement sont des roues dentées (25, 27) et les dentures de l'unité d'entraînement avant et de l'unité d'entraînement arrière se coupent dans leur module respectif.

14. Toit de véhicule selon l'une quelconque des revendications 1 à 13,
**caractérisé en ce que** chaque longeron latéral (5, 5') peut être déplacé autour d'un axe longitudinal (38) dans sa position de pivotement au moyen d'un dispositif de pivotement.

15. Toit de véhicule selon la revendication 14,
**caractérisé en ce que** le dispositif de pivotement présente une piste de commande (41) avec plusieurs portions de piste (55, 56, 58, 59) avec laquelle une partie de commande (45) du longeron latéral (5, 5') est en prise.

16. Toit de véhicule selon la revendication 15,
**caractérisé en ce qu'**une coulisse de commande (40) contenant la piste de commande (41) est disposée le long du rail de guidage avant ou arrière (20, respectivement 22).

17. Toit de véhicule selon la revendication 15 ou 16,
**caractérisé en ce qu'**un bras de commande (42) du longeron latéral (5) est en prise avec la piste de commande (41) et adopte des positions de pivotement correspondant aux portions de piste respectives (55, 56, 58, 59) de la piste de commande (41).

18. Toit de véhicule selon l'une quelconque des revendications 15 à 17,
**caractérisé en ce qu'**une première portion de piste extérieure (56), qui est inclinée vers le bas par rapport à la direction de déplacement du longeron latéral (5), commande un pivotement initial vers l'intérieur du longeron latéral (5).

19. Toit de véhicule selon l'une quelconque des revendications 1 à 18,
**caractérisé en ce qu'**au moins une coulisse de guidage (45, 48) est disposée sur la voie de déplacement du longeron latéral (5, 5') et reçoit une partie de retenue (46) du longeron latéral (5, 5').

20. Toit de véhicule selon la revendication 19,
**caractérisé en ce que** la partie de retenue (46) est un boulon de support (46) disposé sur le bras de commande (42) du longeron latéral (5, 5'), qui est disposé coaxialement à l'axe de pivotement (38) du longeron latéral (5, 5').

21. Toit de véhicule selon la revendication 19 ou 20,
**caractérisé en ce qu'**une coulisse de guidage extérieure (45) est prévue en association avec la position extérieure du longeron latéral (5, 5') et une coulisse de guidage intérieure (48) est prévue en association avec la position intérieure du longeron latéral (5, 5').

22. Toit de véhicule selon l'une quelconque des revendications 1 à 21,
**caractérisé en ce qu'**un recouvrement (12), en particulier un recouvrement en verre, forme le dispositif de recouvrement avant et peut être déplacé vers l'arrière par-dessus le toit du véhicule (11) dans une position d'ouverture dans laquelle au moins son bord arrière (16) est soulevé.
